# EUROPEAN PATENT SPECIFICATION

(11) **EP 1 061 283 B1**
(45) Date of publication and mention of the grant of the patent: **22.09.2004**
(21) Application number: 00110322.5
(22) Date of filing: 13.05.2000
(51) Int. Cl.: F16F 9/04

(54) **Improved pneumatic spring**
Verbesserte Gasfeder
Amortisseur pneumatique amélioré

(30) Priority: 16.06.1999 IT PN990052
(43) Date of publication of application: 20.12.2000
(73) Proprietor: BORDIGNON S.p.A., 36028 Rossano Veneto, Vicenza (IT)
(72) Inventor: Bordignon, Silvano, 36027 Rosà, Vicenza (IT); Bordignon, Romeo, 36022 Cassola, Vicenza (IT)
(74) Representative: Giugni, Valter

(56) References cited:
- WO-A-97/07999
- DE-B- 1 147 495
- DE-B- 1 224 568
- DE-B- 1 264 877
- DE-C- 613 774
- DE-C- 705 036
- GB-A- 2 096 731
- US-A- 3 795 390
- RUSSIAN PATENTS ABSTRACTS Section PQ, Week 199022 Derwent Publications Ltd., London, GB; Class Q63, AN 1990-169942 XP002148511 & SU 1 521 953 A (RAKHMANOV N N), 15 November 1989 (1989-11-15)

## Description

The present invention refers to a pneumatic spring, particularly designed for use in metal forming presses or anyway, suitable for separating surfaces that are actuated with high contact pressure, provided with particular features that are effective in improving the performance thereof as compared with existing gas springs.

A pneumatic spring is generally known to be substantially constituted by one or more sealed chambers in which air, or some other gas, undergoes a compression when a load is applied.

Pneumatic springs are also known to be highly efficient since they have no rolling or sliding part and there are no frictions or material strains in general.

These springs are used in many different applications, particularly in vehicle suspensions and the mechanical isolation of machinery parts.

Pneumatic springs are known to exist in the art in a variety of configurations and with a variety of features:
- The springs that are known in the art as "gas springs" are substantially constituted by an outer cylinder provided with a coaxial cavity extending throughout the interior thereof, an internal piston adapted to slide within said cavity so as to compress the gas contained therein, and a seal of the O-ring type adapted to tightly seal the junction between the inner surface of the cylinder and the side surface of the piston.

These springs are actually capable of effectively meeting a great variety of requirements and are furthermore capable of being manufactured with the use of generally known, readily available techniques; however, they have two major drawbacks that make their use critical in applications involving particularly demanding situations. So, for instance, a first problem is connected with the presence of the sealing gasket itself. Such a seal is in fact subject to weardown by the natural course of things, in particular when working in the presence of more or less corrosive or degrading atmospheres, and this of course leads to a certain downgrading of the overall performance of the assembly.

Furthermore, the geometry itself of the spring assembly, ie. the coaxial arrangement of the axis of the piston with respect to the direction of movement thereof within the cylinder, implies that the external force on the stem of the piston must be applied according to the same axis, otherwise a further accelerated downgrading of the spring would unfailingly have to be accepted. This constraint places further limitations upon the use of gas springs of this type.
- Gas springs that are used in particular as dampening or shock-absorbing springs in the vehicle and similar industry, are adapted to perform two distinct tasks, ie. to act so as to carry out the task of ensuring an elastic cushioning effect to counter low-frequency, wide-amplitude oscillations and vibratory stresses, and to ensure at the same time a dampening effect for low-amplitude, high-frequency vibrations.

This twofold task is quite frequently performed through the use of sealing or dampening members or even the use of appropriate valve means, which are quite often associated with vibration dampening liquids, such as disclosed for instance in US-A-5 518 225, US-A-4 697 797 and US-A-5 669 597, as well as in the patent publications cited as prior-art therein.

The effectiveness of these devices is certainly well-proven, but they anyway are associated to a clear construction complexity and manufacturing delicateness and, of course, resulting rather high costs.
- Gas springs are also known which rely on the use of bellows-like members to separate chambers containing different fluids, usually gases and liquids, performing different dampening and absorbing tasks for high-amplitude vibratory stresses. These springs, however, still show the problems that are typically connected with the presence of sealing gaskets and a considerable excursion with low coefficients of elastic strength, and which simply cannot be eliminated with the use of loads, or biases, through the pro-compression of the gas being used.

Furthermore, the above described types of springs are particularly designed and provided to work with their gas reaching pressure values in the order of magnitude comprised between 10 and 15 bar, and are not therefore suitable for use in applications as dampening springs in metal forming presses, in which working pressures may reach and even exceed 200 bar.

From DE 705036 a gas spring is known, where the sealing between the piston (b) and the cylinder (a) is provided by a closed and elastic container (g) placed inside the pneumatic chamber; however the side walls of said closed elastic container (g) are directly stretched during any operation on said spring, changing their lengths for the same excursion of the spring excursion ; this circumstance brings quickly to the wear-out of said container, so that the spring looses its sealing capability and suffers of a performance degradation.

It is therefore a main purpose of the present invention to provide a solution for the implementation of pneumatic springs which go without either gas or liquid sealing gaskets, are capable of also accepting and withstanding loads that are not aligned with the axis of the spring and, albeit within certain limits, are imparted from different and variable directions, are quite compact in both their width dimension and height dimension, and in which the pressure of the gas can be pre-loaded to very high values.

These springs shall furthermore be capable of being manufactured with simple materials and techniques that are readily available on the market.

The present invention discloses a type of springs having the characteristics that are substantially described with particular reference to the appended claims.

Features and advantages of the present invention can anyway be more readily and clearly understood from the description that is given below by way of nonlimiting example with reference to the accompanying drawings, in which:
- Figure 1 is a schematical vertical-section, longitudinal view of an uncompressed spring according to a first embodiment of the present invention;
- Figure 2 is a vertical-section view of the spring shown in Figure 1, however in a fully compressed state;
- Figure 2B is a view of a variant in the embodiment of the spring shown in Figure 2;
- Figure 3 is a view of a variant in the embodiment of the spring shown in Figure 1;
- Figure 4 is a view of the spring shown in Figure 3, however in a fully compressed state;
- Figure 5 is a schematical vertical-section, longitudinal view of an uncompressed spring according to a second embodiment of the present invention;
- Figure 6 is a vertical-section view of the spring shown in Figure 5, however in a fully compressed state;
- Figure 7 is a view of a variant in the embodiment of the spring shown in Figure 5;
- Figure 8 is a view of the spring shown in Figure 7, however in a fully compressed state.

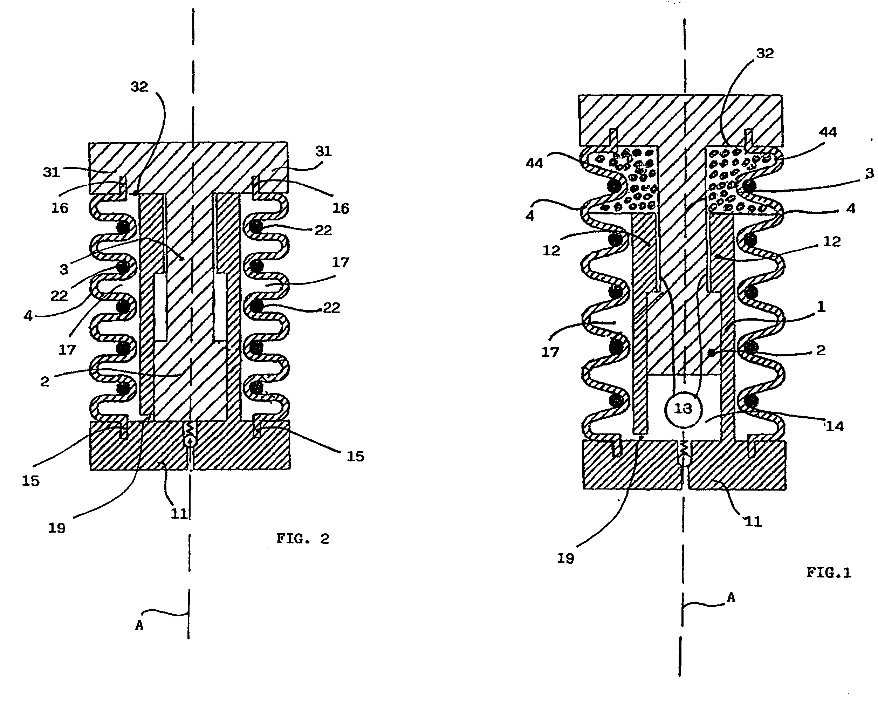

With reference to Figures 1 2, 3 and 4, a gas spring according to the present invention can be noticed to essentially comprise: a hollow cylindrical casing 1, an internal piston 2, a stem 3 adapted to actuate said piston, an elastic sealing bellows-like member.

A base of said cylindrical casing is fully closed by a circular wall 11, whereas the other base is only partially closed by a related circular wall 12, owing to its being provided with a central opening 13. The piston 2 is adapted to slide within said cylindrical casing so as to define a variable-volume chamber 14, the volume of which may possibly be even reduced to zero by having the piston fully pressed against the circular wall 11.

The stem 3, which is connected to the piston at an extremity thereof, forms the actuating member of said piston and is adapted to slidably move through the central opening 13; the guide of the stem-piston assembly is brought about by the coupling between the wall of the piston and the inner surface of the casing 1. Said stem is protruding radially with a portion 31 thereof from the body of the cylindrical casing, wherein said portion 31 disposes itself in a plane, continuous manner beyond the outer edge of said hollow casing, orthogonally to the common axis "A" of the piston, the stem and the cylindrical casing.

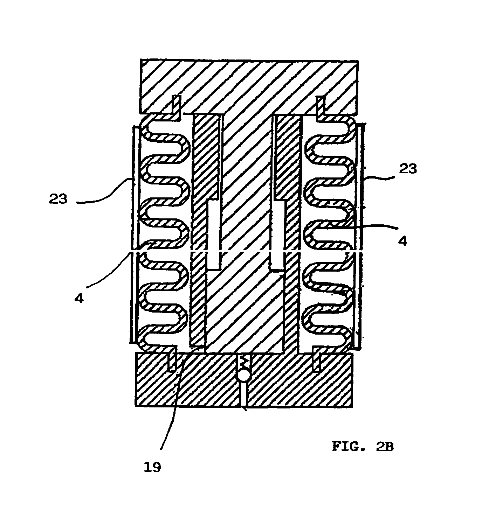

Anyway, a gas spring of the traditional, generally known type has been described up to this point.
The determinant feature of the present invention is constituted by two basic factors, ie.:
A) - The first such factor is given by the presence of a cylindrical containing member having its side surface provided with a plurality of elastic corrugations 4, which are preferably coaxial with said common axis of the piston and are arranged on respective planes that are orthogonal to said common axis "A".
   In other words, what is described and used here is an elastic bellows-like member, in which one of the circular edges 15 of this bellows-like member is hermetically engaged against the circular wall 11, while the opposite edge 16 is hermetically engaged, by the use of means that are generally known in the art, against said external portion 31 of the stem 3, as this can best be seen in Figures 1 and 2.
   This first factor, therefore, is provided to ensure that a definite quantity of gas is always maintained inside an elastic container (bellows), regardless of the pressure to which said gas is subjected.
B) - The second factor relates to the air-tight seal that is normally requested between the stem-piston assembly and the cylindrical casing; as a matter of fact, no tight seal is required in the present invention: quite on the contrary, for the same invention to be able to operate, a relatively free passage of gas is needed between the hollow space or interstice 17, provided between the bellows-like member and the side surface of said casing, and the chamber 14.

Such a passage of gas can take place in the non-sealed interstices between the stem-piston assembly and the cylindrical casing, but preferably through one or more passages 19 provided in the wall of the cylindrical casing 1. In a preferred manner, these passages are provided in the zone of the wall of said casing which is contiguous to said first circular wall, so as to enable the chamber to be emptied completely when the piston is fully pressed.

It clearly appears that such second requisite is in full opposition, ie. diametrically contrary to the prior-art practice in general, which in fact requires the greatest possible sealing effect or, in other words, a minimum loss or leakage between the wall of the piston and the corresponding cylinder.

At this point, the way and mode of operation of the invention can certainly be easily inferred: when the stem is pressed by a force that is approximately parallel to the axis "A", the piston moves into the cylindrical casing, thereby reducing or possibly even annulling the inner volume of the chamber 14, while the gas that is contained therein is expelled and transferred into the hollow space 17 where it remains under pressure and is able to exert its elastic strength action by acting both directly on to the inner side 32 of said plane portion 31 and on to a corresponding corrugation of the bellows-like member in contact with the same inner side 32.

It can therefore be noticed that, as opposed to what usually happens in traditional gas springs, the gas that is in this case compressed by the piston in said chamber 14 forms and delivers only a part of the overall elastic strength that is generated by the described spring.

The advantages of the present invention can therefore be easily inferred: in fact, there is no need for any air-tight seal, ie. sealing gasket, to be provided; contact surfaces between piston and cylinder are closed hermetically, so that any risk of contamination from outside is practically avoided, and, furthermore, these springs can be pre-loaded to even very high pressures without any risk for the charge to be gradually released, thereby reducing and/or even annulling the function of the spring.

Finally, owing just to said absence of gasket means, it is possible for the spring to be subjected to pressures or forces that may be imparted from not exactly axial, but even slightly inclined directions, since that absence of hermetically sealing gaskets does not demand a strictly axial direction of the forces; as a matter of fact, the basic feature of the present invention is based on the fact that, while in the prior-art practice the piston performs a twofold function, ie.:
- reducing the volume of the gas, and
- ensuring, with the sealing gasket, the tightness of the chamber under pressure,
   according to the present invention this two functions are associated with each other and ensured by two different component parts that are unrelated with each other, ie.:

- the piston, whose function is a guiding one in lowering the piston, which things brings about a reduction in the volume of the gas and, therefore, a corresponding increase in the pressure thereof (if Figure 1 is looked at, it can in fact be noticed that the volume of the gas is not only reduced by the volume of the chamber 14, but also by the volume of the chamber 44 which can be defined as the volume being comprised between the bellows 4, the stem 3 in the portion thereof protruding from the casing 1, and the inner side 32 of said plane portion 31);
- the hermetically closed bellows-like member containing the variable-volume portion of the chambers 14 and 44.

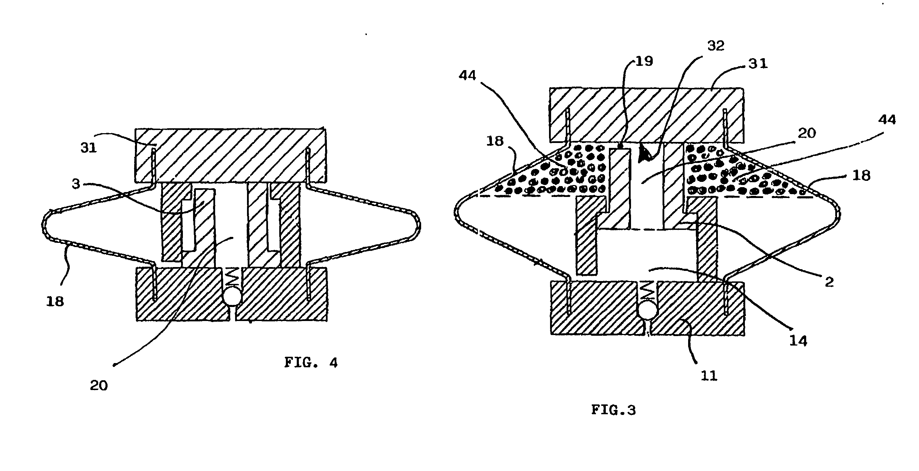

With reference to Figures 3 and 4, a variant of the present invention is now illustrated and described, which differs from the afore described one in that the bellows-like member is formed by a single corrugation 18 and the piston is provided with a cavity 20 which is opened towards the chamber 14 and which is also partly provided within said stem 3.

Such a configuration has the advantage of a greater simplicity and still lower costs in both construction and manufacturing. Moreover, the cavity 20 allows for the characteristics of the gas spring to be defined within wider margins, without this implying any excessive or appreciable increase in the outer dimensions of the single corrugation.

Also in this case, the chamber 44, as defined as the volume which is comprised between the single-corrugation bellows-like member 18, the stem 3 in the portion thereof that protrudes from the casing 1 and the inner side 32 of said plane portion 31, is almost completely annulled, at the same time as the volume of the chamber 14 is reduced to zero, owing to the piston being completely lowered, as this can be easily noticed by comparing Figures 3 and 4 with each other.

A useful improvement can be advantageously obtained by taking due notice of the fact that a high pressure imparted within the bellows-like member can most easily cause it to deform outwardly, owing to the elasticity thereof, and this possibility actually increases the risk of a breakdown and, anyway, brings about an increase in the outer dimensions.

In order to eliminate such drawbacks, said outward deformation can be contrasted by closing in the ventral zones of the corrugations with a plurality of non-elastic rings 22 that are effective in preventing the bellows-like member from swelling, thereby substantially preserving the initial width thereof, as shown in Figures 1 and 2.

A variant of the above solution can be seen to be illustrated in Figure 2B, which shows a rigid cylindrical member 23 that is substantially coupled externally to the bellows-like member, so that the outer edges of respective corrugations are prevented from spreading out and, therefore, the same results are thereby obtained as in the above described case in which the rings 22 are on the contrary used to such a purpose.

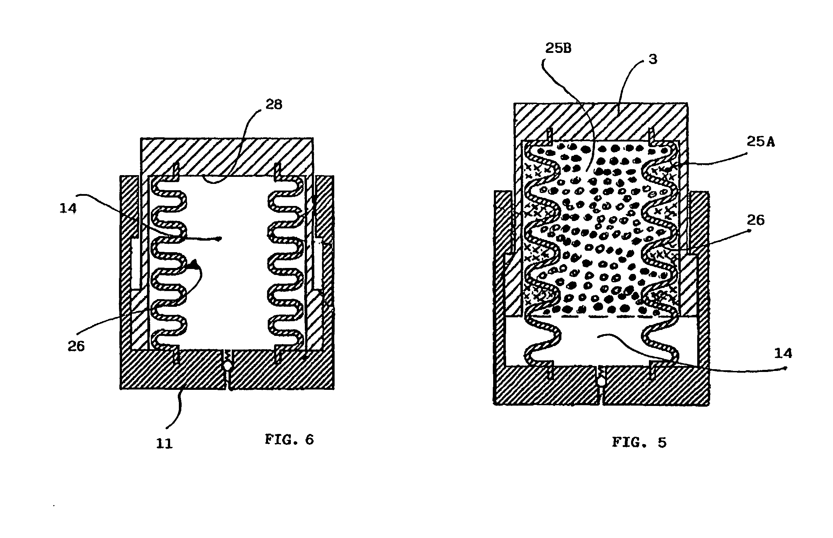

With reference to Figures 5, 6, 7 and 8, the invention can be appreciated as being implementable according to different embodiments; in this case the piston is provided internally with a cavity 25 opening towards said chamber and extending further into said stem 3.

The means that are provided to ensure the hermetic seal, ie. the tightness towards the outside of the compression chamber or a part thereof comprise a substantially cylindrical elastic container member, which is arranged completely inside said chamber and said cavity 25 within said stem and related piston; said container member has its side surface provided with a plurality of elastic corrugations 26 that are orthogonal to the moving direction of the piston, wherein said corrugated container member has edge that is hermetically sealed against the inner surface 28 of said stem 3, whereas its opposite edge is hermetically sealed against said first circular wall 11.

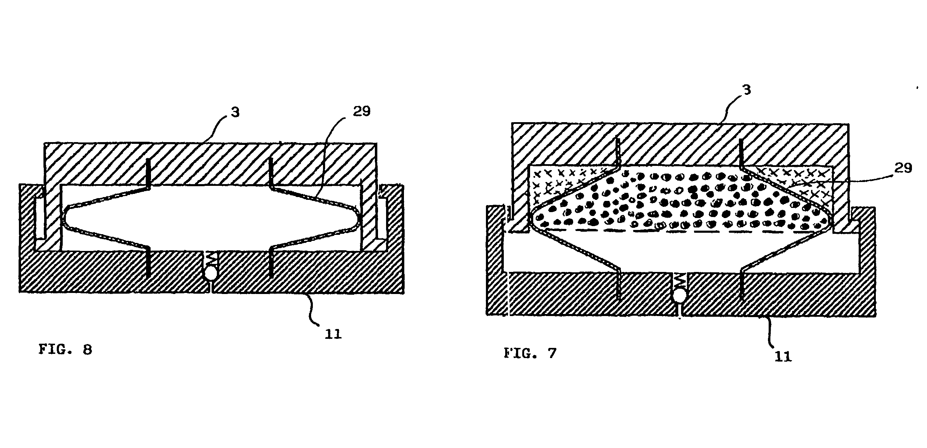

For reasons of still greater clearness, and with particular reference to Figures 5 and 7, said cavity 25 is defined as the whole cavity arranged within said stem and said piston, and comprises both
- the portion 25A, comprised between said corrugations 26 of said elastic container member and the outer wall of the stem 3 and related piston, which is represented in Figures 5 and 7 as an area marked by small crosses,
- and the portion 25B inside said corrugations 26 and represented as a dotted area in the same Figures.

As compared to the formerly described embodiment, this embodiment has the advantage that no need actually arises for members to be provided to retain the bellows from swelling outwards, as well as a greater compactness.

Even in this case it is anyway possible for an internal bellows-like member with a single corrugation 29 to be used, as illustrated in Figures 7 and 8, as anyone skilled in the art is easily capable of understanding, so that no further explanation is considered necessary in this connection.

## Claims

1. Pneumatic spring, particularly of the type used in metal forming presses, comprising:
- a hollow casing (1) having two opposite, parallel bases, in which a first one of these bases is completely closed by a first appropriate wall (11) and the other base is closed by a second wall (12) provided with a central opening (13),
- a piston (2) adapted to slidably move within said hollow casing and delimiting a chamber (14) facing said first base, and further adapted to act upon the gas contained in said chamber, said second wall (12) constituting an abutment member preventing said piston from sliding out of said hollow casing,
- a stem (3) connected with an extremity thereof to a central portion of said piston and passing through said central opening in said second wall (12) so as to have a portion thereof that protrudes externally from said casing,
means adapted to ensure the tightness of the seal of at least a portion of the inner volume of said chamber (14) towards the outside, **characterized in that**
- said stem (3) is provided with a portion (31) that is substantially plane and orthogonal to the axis of said piston, and extends to protrude externally from said hollow casing;
- said means comprise a preferably cylindrical container member having its side surface provided with a plurality of elastic corrugations (14) that are either arranged on orthogonal planes with respect to the moving direction of the piston or wound in a coil-like manner;
- said corrugated container member has an edge that is hermetically sealed against said substantially plane portion (31), while the opposite edge thereof is hermetically sealed against said first wall (11) or an external projection thereof

2. Pneumatic spring according to claim 1, **characterized in that** said container member is constituted by a single corrugation (18).

3. Pneumatic spring according to claim 2, **characterized in that** there are provided means on the outside of said container member, which are adapted to contain the deformation towards the outside of said container member.

4. Pneumatic spring according to claim 3, **characterized in that** said external means are constituted by a plurality of rings (22) arranged in respective grooves between pairs of contiguous corrugations.

5. Pneumatic spring according to claim 4, **characterized in that** said external means are constituted by a laterally closed member, whose side surface (23) is in contact with the outer edges of a plurality of said corrugations.

6. Pneumatic spring according to any of the preceding claims, **characterized in that** in the wall of said cylindrical hollow casing there is provided at least a passage (19) that enables said chamber to communicate with the hollow space (17) that is delimited outwardly by said container member and inwardly by said hollow casing itself.

7. Pneumatic spring according to any of the preceding claims or a combination thereof, **characterized in that** said piston is provided internally with a cavity (20) opening towards said chamber (14), which cavity can possibly extend into said stem (3).

8. Pneumatic spring according to claim 1, **characterized in that**
- said stem and said piston are provided internally with a cavity (25A, 25B) opening towards said chamber (14) and extending into said stem (3);
- said means comprise a preferably cylindrical elastic container member having its side surface provided with a plurality of elastic corrugations (26), in which said corrugated container member has an edge that is hermetically sealed against the inner surface (28) of said stem (3), while the opposite edge thereof is hermetically sealed against said first circular wall (11).

9. Pneumatic spring according to claim 8, **characterized in that** said container member comprises a single corrugation (29).

## Patentansprüche

1. Pneumatische Feder, insbesondere von jener Art, wie sie in Metallformpressen verwendet wird, enthaltend:
- ein hohles Gehäuse (1) mit zwei gegenüberliegenden, parallelen Basen, in dem eine erste dieser Basen vollständig von einer ersten geeigneten Wand (11) verschlossen ist und die andere Basis von einer zweiten Wand (12), die mit einer zentralen Öffnung (13) versehen ist, verschlossen ist,
- einen Kolben (2), der dazu eingerichtet ist, sich innerhalb des hohlen Gehäuses gleitend zu bewegen und eine Kammer (14) auf der Seite der ersten Basis zu begrenzen, und weiter dazu eingerichtet ist, auf das in dieser Kammer befindliche Gas einzuwirken, wobei die zweite Wand (12) ein Anschlagelement bildet, das verhindert, dass der Kolben aus dem hohlen Gehäuse hinausgleitet,
- eine Stange (3), die an ihrem einen Ende mit einem zentralen Abschnitt des Kolbens verbunden ist und durch die zentrale Öffnung in der zweiten Wand (12) verläuft, so dass ein Abschnitt von ihr aus dem Gehäuse nach außen ragt,
- Einrichtungen, die dazu eingerichtet sind, den dichten Abschluss wenigstens einen Teils des Innenvolumens der Kammer (14) nach außen sicherzustellen, **dadurch gekennzeichnet, dass**
- die Stange (3) mit einem Abschnitt (31) versehen ist, der im Wesentlichen eben ist und orthogonal zur Achse des Kolbens verläuft und sich so erstreckt, dass er aus dem hohlen Gehäuse nach außen ragt;
- die Einrichtungen ein vorzugsweise zylindrisches Behälterelement aufweisen, dessen Seitenfläche mit einer Vielzahl elastischer Rippen (4) versehen ist, die entweder in bezüglich der Bewegungsrichtung des Kolbens orthogonalen Ebenen angeordnet sind oder schraubenlinienförmig gewunden sind;
- das gerippte Behälterelement einen Rand hat, der gegenüber dem im Wesentlichen ebenen Abschnitt (31) hermetisch abgedichtet ist, während sein gegenüberliegender Rand hermetisch gegenüber der ersten Wand (11) oder einem äußeren Vorsprung derselben abgedichtet ist.

2. Pneumatische Feder nach Anspruch 1, **dadurch gekennzeichnet, dass** das Behälterelement von einer einzelnen Rippe (18) gebildet ist.

3. Pneumatische Feder nach Anspruch 2, **dadurch gekennzeichnet, dass** an der Außenseite des Behälters Einrichtungen vorgesehen sind, die dazu eingerichtet sind, die Verformung zur Außenseite des Behälterelements aufzunehmen.

4. Pneumatische Feder nach Anspruch 3, **dadurch gekennzeichnet, dass** die äußeren Einrichtungen von mehreren Ringen (22) gebildet sind, die in jeweiligen Rillen zwischen zwei angrenzenden Rippen angeordnet sind.

5. Pneumatische Feder nach Anspruch 4, **dadurch gekennzeichnet, dass** die äußeren Einrichtungen von einem seitlich verschlossenen Element gebildet sind, dessen Seitenfläche (23) mit den äußeren Rändern mehrerer der Rippen in Berührung ist.

6. Pneumatische Feder nach einem der vorhergehenden Ansprüche, **dadurch gekennzeichnet, dass** in der Wand des zylindrischen hohlen Gehäuses wenigstens ein Durchgang (19) ausgebildet ist, der es ermöglicht, dass die Kammer mit dem Hohlraum (17) kommuniziert, der nach außen von dem Behälterelement und nach innen von dem hohlen Gehäuse selbst begrenzt ist.

7. Pneumatische Feder nach einem der vorhergehenden Ansprüche oder einer Kombination davon, **dadurch gekennzeichnet, dass** der Kolben im Innem mit einem Hohlraum (20) versehen ist, der sich gegen die Kammer (14) öffnet und der sich ggf. in die Stange (3) erstrecken kann.

8. Pneumatische Feder nach Anspruch 1, **dadurch gekennzeichnet, dass**
- die Stange und der Kolben im Innern mit einem Hohlraum (25A,25B) versehen sind, der sich gegen die Kammer (14) öffnet und sich in die Stange (3) erstreckt;
- die Einrichtungen ein vorzugsweise zylindrisches, elastisches Behälterelement enthalten, dessen Seitenfläche mit mehreren elastischen Rippen (26) versehen ist, in dem das gerippte Behälterelement einen Rand hat, der gegen die Innenfläche (28) der Stange (3) hermetisch abgedichtet ist, während ihr gegenüberliegender Rand hermetisch gegen die erste kreisförmige Wand (11 )abgedichtet ist.

9. Pneumatische Feder nach Anspruch 8, **dadurch gekennzeichnet, dass** das Behälterelement eine einzelne Rippe (29) aufweist.

## Revendications

1. Ressort pneumatique, particulièrement du type utilisé dans des presses de travail du métal par formage, comprenant :
- un boîtier creux (1) comportant deux bases opposées parallèles, dans lequel une première de ces bases est complètement fermée par une première paroi appropriée (11) et l'autre base est fermée par une deuxième paroi (12) munie d'une ouverture centrale (13),
- un piston (2) conçu pour se déplacer de manière coulissante dans ledit boîtier creux et délimiter une chambre (14) face à ladite première base, et conçu en outre pour agir sur le gaz contenu dans ladite chambre, ladite deuxième paroi (12) constituant un élément de butée empêchant ledit piston de glisser hors dudit boîtier creux,
- une tige (3) reliée, à l'une de ses extrémités, à une partie centrale dudit piston et traversant ladite ouverture centrale dans ladite deuxième paroi (12) de façon à avoir l'une de ses parties qui fait saillie à l'extérieur dudit boîtier,
- des moyens conçus pour assurer l'étanchéité du joint d'au moins une partie du volume intérieur de ladite chambre (14) vers l'extérieur,
**caractérisé en ce que**
- ladite tige (3) est munie d'une partie (31) qui est sensiblement plane et perpendiculaire à l'axe dudit piston, et s'étend de façon à faire saillie à l'extérieur dudit boîtier creux ;
- lesdits moyens comprennent un élément formant conteneur de préférence cylindrique dont la surface latérale est munie d'une pluralité d'ondulations élastiques (4) qui sont soit disposées sur des plans orthogonaux par rapport à la direction de déplacement du piston, soit enroulées à la manière d'une bobine ;
- ledit élément formant conteneur ondulé comporte un bord scellé hermétiquement contre ladite partie sensiblement plane (31), alors que son bord opposé est scellé hermétiquement contre ladite première paroi (11) ou une saillie externe de celle-ci.

2. Ressort pneumatique selon la revendication 1, **caractérisé en ce que** ledit élément formant conteneur est constitué d'une seule ondulation (18).

3. Ressort pneumatique selon la revendication 2, **caractérisé en ce que** des moyens sont prévus sur l'extérieur dudit élément formant conteneur, qui sont conçus pour contenir la déformation vers l'extérieur dudit élément formant conteneur.

4. Ressort pneumatique selon la revendication 3, **caractérisé en ce que** lesdits moyens externes sont constitués d'une pluralité d'anneaux (22) disposés dans des gorges respectives entre des paires d'ondulations contigues.

5. Ressort pneumatique selon la revendication 4, **caractérisé en ce que** lesdits moyens externes sont constitués d'un élément latéralement fermé, dont la surface latérale (23) est en contact avec les bords extérieurs d'une pluralité desdites ondulations.

6. Ressort pneumatique selon l'une quelconque des revendications précédentes, **caractérisé en ce que**, dans la paroi dudit boîtier creux cylindrique, est prévu au moins un passage (18) qui permet à ladite chambre de communiquer avec l'espace creux (17) délimité à l'extérieur par ledit élément formant conteneur et à l'intérieur par ledit boîtier creux lui-même.

7. Ressort pneumatique selon l'une quelconque des revendications précédentes ou l'une de leurs combinaisons, **caractérisé en ce que** ledit piston est muni à l'intérieur d'une cavité (20) s'ouvrant vers ladite chambre (14), cette cavité pouvant s'étendre éventuellement dans ladite tige (3).

8. Ressort pneumatique selon la revendication 1, **caractérisé en ce que**
- ladite tige et ledit piston sont munis, à l'intérieur, d'une cavité (25A, 25B) s'ouvrant vers ladite chambre (14) et s'étendant dans ladite tige (3) ;
- lesdits moyens comprennent un élément formant conteneur élastique de préférence cylindrique dont la surface latérale est munie d'une pluralité d'ondulations élastiques (26), dans lequel ledit élément formant conteneur ondulé comporte un bord qui est scellé hermétiquement contre la surface intérieure (28) de ladite tige (3), alors que son bord opposé est scellé hermétiquement contre ladite première paroi circulaire (11).

9. Ressort pneumatique selon la revendication 8,
**caractérisé en ce que** ledit élément formant conteneur comprend une seule ondulation (29).
